Europäisches Patentamt

European Patent Office

Office européen des brevets

(11) Veröffentlichungsnummer: **0 182 098**
**B1**

(12) **EUROPÄISCHE PATENTSCHRIFT**

(45) Veröffentlichungstag der Patentschrift:
22.03.89

(51) Int. Cl.⁴: **B 24 B 17/10**

(21) Anmeldenummer: 85113113.6

(22) Anmeldetag: 16.10.85

(54) Vorrichtung und Verfahren zur verwendungsfertigen, formgebenden Ausarbeitung eines individuell passenden Zahnrestaurationskörpers.

(30) Priorität: 24.10.84 CH 5089/84

(43) Veröffentlichungstag der Anmeldung:
28.05.86 Patentblatt 86/22

(45) Bekanntmachung des Hinweises auf die Patenterteilung:
22.03.89 Patentblatt 89/12

(84) Benannte Vertragsstaaten:
AT BE DE FR GB IT NL SE

(56) Entgegenhaltungen:
DE-A- 1 502 515
DE-A- 1 902 015
GB-A- 563 837
GB-A- 1 114 929
US-A- 2 423 367
US-A- 2 697 878
US-A- 3 570 193
US-A- 4 137 677
US-A- 4 193 228

PATENTS ABSTRACTS OF JAPAN, Band 7, Nr. 16
(M-187) [1161], 22. Januar 1983; & JP - A - 57 173 447 (
NAKAMURATOME SEIMITSU KOGYO K.K.) 25.10.1982

(73) Patentinhaber: Brandestini, Marco, Dr.sc.techn.,
Gartenstrasse 10, CH-8702 Zollikon (CH)
Patentinhaber: Mörmann, Werner H., Dr.med.dent.,
Zweiackerstrasse 57, CH-8053 Zürich (CH)

(72) Erfinder: Brandestini, Marco, Dr.sc.techn.,
Gartenstrasse 10, CH-8702 Zollikon (CH)
Erfinder: Mörmann, Werner H., Dr.med.dent.,
Zweiackerstrasse 57, CH-8053 Zürich (CH)

(74) Vertreter: Blum, Rudolf Emil Ernst et al, c/o E. Blum &
Co Patentanwälte Vorderberg 11, CH-8044 Zürich (CH)

## Beschreibung

Die Erfindung betrifft ein Verfahren für die verwendungsfertige, formgebende Herstellung individuell passender Zahnrestaurationskörper aus einem konfektionierten Rohling aus zahnrestaurativem Material, wobei der Rohling in einem Werkstückhalter befestigt und damit um eine Raumachse drehbar ist und wobei ein Werkzeugträger mit rotierendem Werkzeug vorgesehen ist, dessen Rotationsachse im wesentlichen parallel zur genannten Raumachse verläuft und dessen relative Lage quer zu dieser Raumachse veränderbar ist. Ein Verfahren dieser Art wurde gemäss der Publikation GB-A-1 114 929 dazu verwendet, um Zahnformlinge zu entgraten. Dabei wurde als Werkzeug ein Schleifstein eingesetzt, der mit bestimmter Anpresskraft der bestehenden Kontur des Zahnformlings nachläuft. Bei diesem Verfahren erfolgt demzufolge also mittels des Schleifsteins keine Herausarbeitung der Form des Zahnrestaurationskörpers, sondern eine Oberflächenbehandlung eines bereits geformten Körpers.

Das herkömmliche Verfahren zur Formung solcher Zahnrestaurationen besteht bekanntlich darin, dass eine Wachsform entsprechender Ausgestaltung hergestellt wird, welche als Giessmodell für die Zahnrestauration dient, welche aus hochwertigem, giessfähigem Material, wie z.B. Gold, hergestellt wird. Es wurden schon bisher Anstrengungen unternommen, sowohl dieses aufwendige Verfahren als auch die Herstellung von Füllungen mittels moderner Techniken, wie dreidimensionaler Datenaufnahme, rechnergestützer Formbestimmung und numerisch gesteuerten Bearbeitungsmaschinen zu automatisieren. So wird z.B. in EP-A-0 033 492 ein Verfahren gezeigt, wobei die Herstellung eines Wachsmodelles teilweise automatisiert wird. Daraus muss hernach weiterhin auf herkömmliche Weise eine Giessform erstellt werden. Dieses Verfahren kann deshalb die Anforderungen nicht erfüllen, welche zur direkten Herstellung von Zahnrestaurationskörpern aus hartem zahnrestaurativem Material in der Zahnarztpraxis nötig wären. Ungelöst ist dabei insbesondere die Frage der Bearbeitungsart solchen Materials.

Zwar sind aus dem allgemeinen Werkzeugmaschinenbau Schleifmaschinen bekannt, welche auch harte Materialien nach Programm zu bearbeiten in der Lage sind (vgl. JP-A-57 173 447; DE-A-1 502 515; US-A-2 423 367). In diesen Vorrichtungen werden Schleifscheiben verwendet, welche für die Nachbearbeitung einzelner Oberflächen vorgefertigter Werkstücke dienen, jedoch nicht dazu geeignet sind, das Werkstück selbst aus dem Vollen gebrauchsfertig herauszuarbeiten.

Es stellt sich damit die Aufgabe, ein Verfahren und eine Vorrichtung zu finden, welche es erlauben, aus einem konfektionierten Rohling aus hochfestem, zahnrestaurativem Material in kurzer Bearbeitungszeit einen Zahnrestaurationskörper mit individueller Kontur verwendungsfertig herauszuarbeiten.

Die Lösung dieser Aufgabe erfolgt mit dem in Anspruch 1 definierten Verfahren sowie mittels der in Anspruch 5 definierten Vorrichtung.

Damit kann die geringe Dicke von Trennscheibenblättern zur Erzeugung der geforderten Formen ausgenutzt werden, wobei jedoch die hauptsächliche Abtragsleistung durch die seitlichen Flanken des Trennscheibenblatts übernommen wird. Die Herausarbeitung des Zahnrestaurationskörpers aus dem Rohling erfolgt dabei vorzugsweise entlang einer Raumachse, die der mesiodistalen Verlaufsachse des zu restaurierenden Zahns entspricht. Die Bearbeitung längs dieser Achse erlaubt es trotz dem relativ grossen Radius der Trennscheibe, die auftretenden Konturen von sog. Inlays in der beanspruchten Bearbeitungsart zu erzeugen.

Zur Erzeugung komplizierterer Formen, wie z.B. für Kronen oder Onlays, kann bei einer Ausführung der Vorrichtung ein zweites rotierendes Abtragswerkzeug vorgesehen sein, das fingerförmig ausgebildet ist und das wahlweise einsetzbar ist. Während die Hauptabtragsleistung weiterhin durch das Trennscheibenblatt erbracht wird, vollendet das fingerförmige Abtragswerkzeug die Bearbeitung an denjenigen Stellen, die für das Trennscheibenblatt aus geometrischen Gründen nicht zugänglich sind, wie z.B. konkave Ausnehmungen mit einem Krümmungsradius, der kleiner ist als der Scheibenradius.

Da die beanspruchte Vorrichtung dazu geeignet sein soll, in Zahnarztpraxen eingesetzt zu werden, bestehen für den Antrieb der Abtragswerkzeuge gewisse Beschränkungen, insbesondere hinsichtlich der Lärmerzeugung, der Speisung und der Grösse. Der beim dargestellten Ausführungsbeispiel eingesetzte hydrodynamische Rotationsantrieb mit Turbine am Werkzeugträger und davon entfernter Druckquelle hat sich hierbei als optimal erwiesen, indem das Antriebswasser zugleich als Kühlung und Spülwasser zum Wegführen des Abriebs einsetzbar ist. Die aus den Veröffentlichungen DE-A-1 902 015 und US-A-4 193 228 bekannten hydrodynamischen Antriebe betreffen alle Handmaschinen, welche nicht geeignet sind für die automatische Ausarbeitung eines Werkstücks aus dem Vollen, da insbesondere keine ausreichende Kühlung vorgesehen ist.

Von Bedeutung ist dabei auch die Möglichkeit der Regelung der Abtragsleistung, welche mit Vorteil mittels einer Drehzahlmesseinrichtung zur Bestimmung der Umdrehungszahl des Trennscheibenblatts vorgenommen wird. Dadurch kann vermieden werden, dass der harte aber spröde Werkstoff der Zahnrestaurationskörper und/oder das Werkzeug bei der Bearbeitung durch übermässige Beanspruchung beschädigt wird. Die Drehzahlmessung wirkt dazu regelnd auf die relative Vorschubgeschwindigkeit zwischen dem Rohling und dem Abtragswerkzeug ein.

Ausserdem lässt sich durch die Drehzahlmessung eine Justierung des Abstandes vom Werkzeug zur Achse des Werkstückhalters vornehmen.

Die Justierung kann dabei so erfolgen, dass das rotierende Schleifwerkzeug quer zur Achse des Werkstückhalters gegen eine Referenzstelle des eingesetzten Rohlings geführt wird, bis durch Berührung ein Abfallen der Drehzahl festgestellt wird, womit die Berührungslage des Werkzeugs als Referenz für die folgende Bearbeitung dient.

Um einen Einsatz in der Zahnarztpraxis und insbesondere im Behandlungsraum selbst zu gestatten, ist die Vorrichtung ferner vorteilhaft mit einer Einrichtung zum optischen Erfassen von räumlichen Oberflächenformen mittels Bildauswertung sowie mit einem Rechner zur Errechnung und Speicherung eines Konstruktionsplans für einen, den Formteil bildenden, an die Oberflächenformen angepassten, alloplastischen Körpers versehen. Dabei ragen der Werkstückhalter für den Formteil und der Werkzeughalter für das rotierbare Schleifwerkzeug in eine in das Rechnergehäuse integrierte Bearbeitungskammer, die von aussen zugänglich und gegen die Rechnerseite hin flüssigkeitsdicht abgeschlossen ist.

Damit kann eine kompakte Baueinheit gebildet werden, die bis auf einen Stromanschluss autonom arbeitet.

Nachfolgend wird ein Ausführungsbeispiel der Erfindung anhand der Zeichnungen näher erläutert. Darin zeigen:

Fig. 1 eine Gesamtansicht einer als Baueinheit mit einem Rechner ausgestalteten Bearbeitungsvorrichtung gemäss der Erfindung,

Fig. 2 den Aufbau eines Rohlings für die Bearbeitung in der Vorrichtung,

Fig. 3 eine Schnittansicht durch die Bearbeitungskammer und die angrenzenden Bauteile,

Fig. 4 eine Seitenansicht des Werkzeugträgers teilweise im Schnitt und den im Werkstückhalter eingesetzten Rohling vor der Bearbeitung,

Fig. 5 eine Vorderansicht des Werkzeugträgers von Fig. 4 mit einem zweiten, fingerförmigen Schleifwerkzeug,

Fig. 6a und b zwei Detailansichten einer Freistrahlturbine, die zum Antrieb eines scheibenförmigen Schleifwerkzeugs am Werkzeugträger angeordnet ist,

Fig. 7 eine Schnittansicht durch eine Axialturbine, die zum Antrieb des fingerförmigen Schleifwerkzeugs vorgesehen ist,

Fig. 8 eine schematische Ansicht der Bearbeitungskammer zur Darstellung des Wegs der Antriebsflüssigkeit und der Drehzahlmessung, und

Fig. 9 eine weitere Ausführung des Werkzeugträgers mit einem zweiten, fingerförmigen Abtragswerkzeug, das wahlweise neben dem Trennscheibenblatt einsetzbar ist.

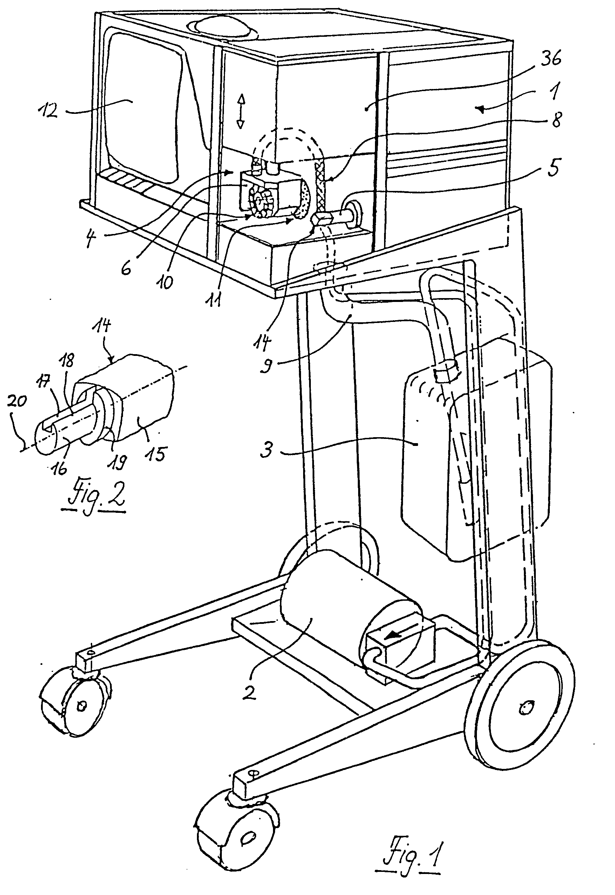

Zunächst wird anhand von Fig. 1 die Vorrichtung in ihrem äusseren Aufbau dargestellt. Die Vorrichtung besitzt ein Gehäuse 1, das im wesentlichen sämtliche elektronischen und mechanischen Komponenten enthält bis auf eine Flüssigkeitspumpe 2 und einen Flüssigkeitsbehälter 3 für den Antrieb des Schleifwerkzeugs. In diesem Gehäuse 1 ist eine Bearbeitungskammer 4 vorgesehen, in welche einerseits ein Werkstückhalter 5 und andererseits ein Werkzeugträger 6 ragen. Die Bearbeitungskammer ist flüssigkeitsdicht gegen das restliche Gehäuse abgedichtet und kann mittels eines Schiebedeckels 36 nach aussen flüssigkeitsdicht und schalldämpfend abgeschlossen werden. Am Werkzeugträger 6 ist eine Turbine 10 erkennbar, mittels welcher das kreisscheibenblattförmige Schleifwerkzeug 11 antreibbar ist. Der Turbine 10 wird hierzu mittels der Flüssigkeitspumpe 2 über einen flexiblen Schlauch 8 die Antriebsflüssigkeit zugeführt, welche über eine Sammelleitung 9 wieder zum Flüssigkeitsbehälter 3 zurückgeführt wird.

Bevor nun näher auf die Ausgestaltung der eigentlichen Bearbeitungsanordnung eingegangen wird, sei zunächst darauf hingewiesen, dass im Gehäuse 1 eine elektronische Schaltung, insbesondere ein Rechner zur optischen Erfassung von räumlichen Oberflächenformen mittels Bildauswertung vorgesehen ist, wie in der veröffentlichten europäischen Patentanmeldung 0 054 785 beschrieben. Der gezeigte Bildschirm 12 dient dabei dem Zahnarzt zur Überprüfung der Rechnerdarstellung der aufgenommenen Zahnkavität in Bezug auf die operationellen Anforderungen. Mittels dem Rechner wird so ein Konstruktionsplan für einen zahnrestaurativen Formteil und ein entsprchendes Bearbeitungsprogramm erstellt. Gemäss diesem Programm wird hernach ein Rohling 14 (vgl. Fig. 2) bearbeitet, wie nachfolgend beschrieben wird. Der aus dem Rohling hergestellte Formteil dient dann als definitiver Passteil, der in den Zahn des Patienten einzementiert bzw. mit einem dentalen Adhäsivmaterial eingefügt wird.

Aus diesem Grund besteht der Rohling vorzugsweise aus einem zahnsubstanzähnlichen Material, wie z.B. einem dentalkeramischen oder Komposit-Werkstoff. Der Rohling 14 besitzt einen Rohlingskörper 15 und einen Halter 16. Während der Rohlingskörper nicht formgenau ausgebildet sein muss, ist der Halter 16 eng toleriert, um eine exakte Positionierung in bezug auf den Werkstückhalter 5 sicherzustellen, wozu die Anschlagflächen 17, 18 dienen. Die exakte Zentrierung wird durch die eng tolerierte zylindrische Form des Halters 16 sichergestellt. Benachbart zum Rohlingskörper 15 ist eine Referenzstelle 19 vorgesehen, welche zur Justierung der Position des Trennscheibenblatts 11 bezüglich der Werkstückachse 20 dient, wie noch näher erläutert werden wird. Der Rohling 15 wird zur Bearbeitung in den Werkstückhalter 5 eingesetzt. Der fertig bearbeitete, d.h. verwendungsfertig geformte Zahnrestaurationskörper wird in der allerletzten Arbeitsphase vom restlichen Rohling abgetrennt und fällt auf den Boden der Bearbeitungskammer 4, während der verbleibende Halter 16 und der Materialrest aus dem Werkstückhalter 5 ausgeworfen wird.

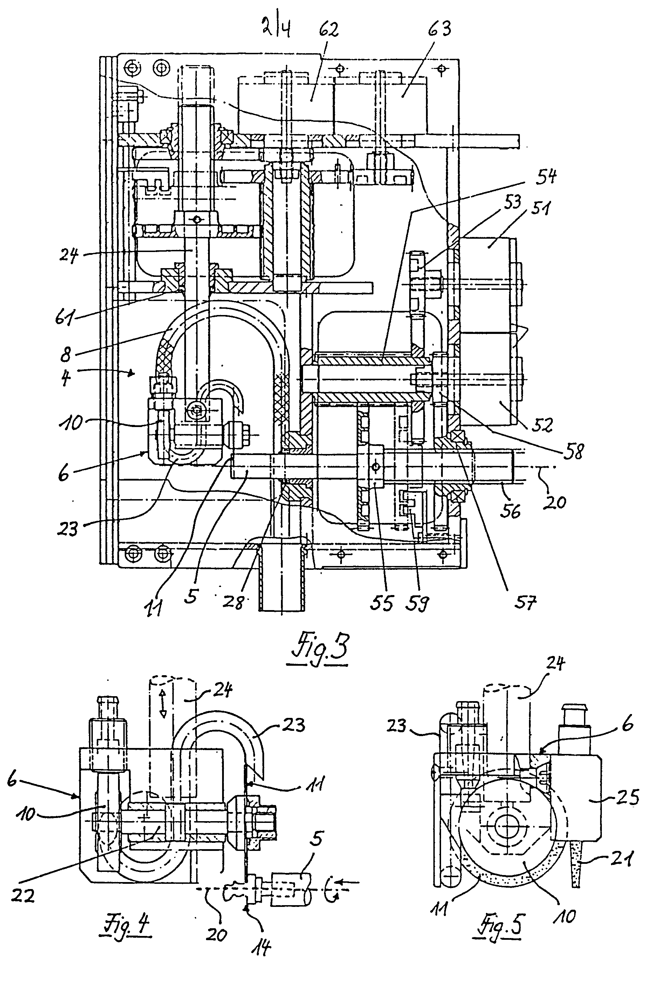

Anhand der Fig. 3 bis 7 und 9 werden nun zunächst die Bearbeitungswerkzeuge und deren gesteuerte Positionierbarkeit näher erläutert.

Die Bearbeitungswerkzeuge sind Diamantwerkzeuge, wobei die Diamanten vorzugsweise im Werkzeugkörper sintergebunden oder galvanisch auf einen metallischen Träger aufgebracht sind.

Wie z.B. aus den Fig. 4 und 5 ersichtlich ist, ist insbesondere ein dünnes, kreisscheibenförmiges Werkzeug 11 vorgesehen, das etwa in Originalgrösse gezeigt ist und hier als Trennscheibe bezeichnet wird, auch wenn es im vorliegenden Zusammenhang als KONTUR-(PROFIL-)Schleifwerkzeug angewendet wird. Wie aus den genannten Figuren ersichtlich ist, erstreckt sich der Diamantbelag auch auf die Seitenflanken der Scheibe 11. Dieses Werkzeug erscheint in der Silhouette (vgl. Fig. 4) nur als feine Linie (Dicke ca. 0.5 mm), was es ermöglicht, entsprechend feine Formen am Werkstück zu erzeugen.

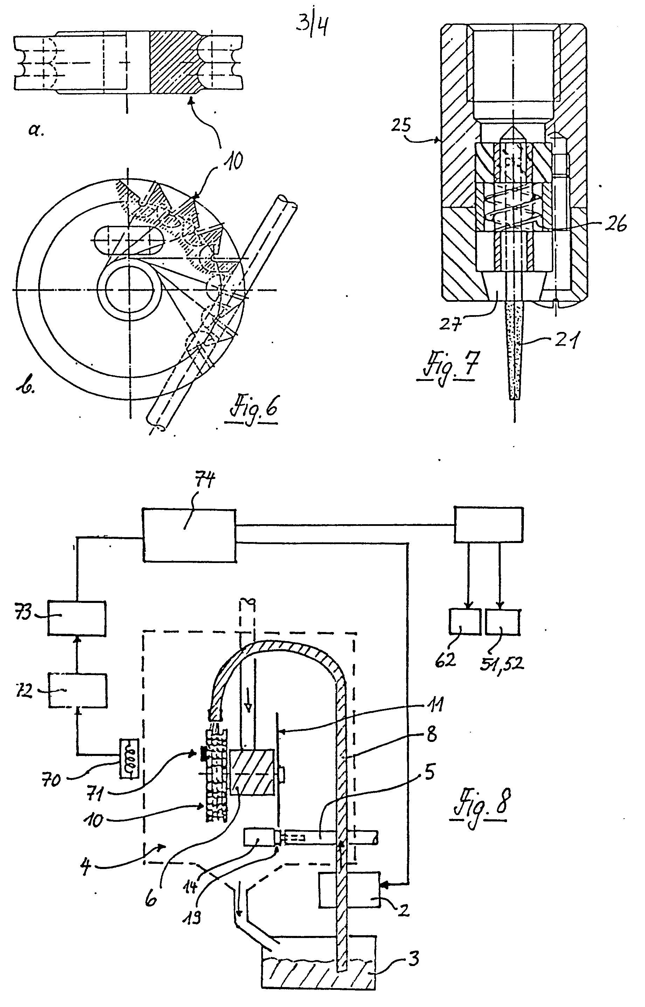

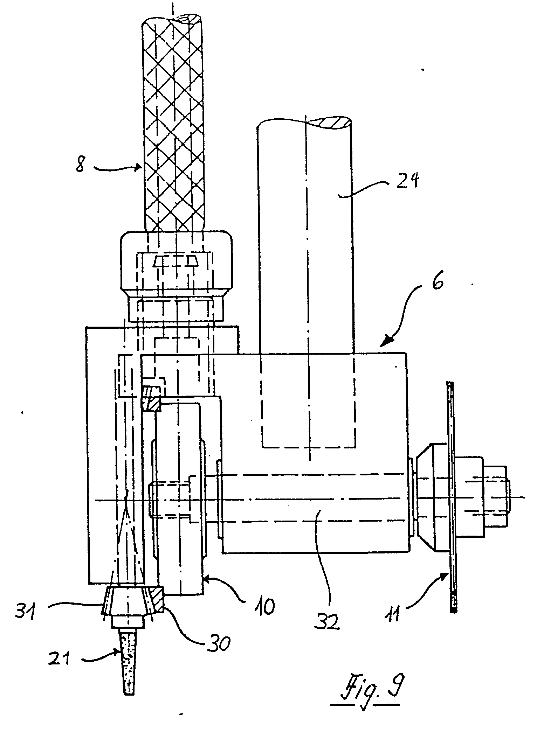

In den Figuren 3 und 4 ist eine Ausführung gezeigt, die als einziges Schleifwerkzeug am Werkzeugträger 6 eine solche Trennscheibe 11 trägt, während gemäss den Fig. 5 und 9 zusätzlich ein fingerförmiges, zweites Schleifwerkzeug 21 vorgesehen sein kann, das wahlweise einsetzbar ist. Am Werkzeugträger 6 ist für die Trennscheibe 11 eine Freistrahlturbine 10 angeordnet, die auf der gleichen Achse 22 sitzt. Der Turbine 10 wird durch den flexiblen, druckfesten Schlauch 8 die Antriebsflüssigkeit, vorzugsweise Wasser, zugeführt, und zwar in einem Strahl, dessen tangentiale Lage aus Fig. 6 ersichtlich ist. Wie aus dieser Figur ebenfalls hervorgeht und keiner weiteren Ausführungen bedarf, ist die Turbine 10 als sog. Peltonrad ausgestaltet. Am Werkzeugträger 6 ist ferner ein s-förmiger Umleitkanal 23 vorgesehen, mittels welchem die von der Turbine 10 abgelenkte Antriebsflüssigkeit aufgefangen und der Bearbeitungsstelle beim Schleifwerkzeug 11 zur Kühlung zugeführt wird.

Das fingerförmige Schleifwerkzeug 21 ist bei der Ausführung gemäss Fig. 5 bezüglich der Achse der Haltestange 24 des Werkzeugträgers 6 im gleichen Abstand angeordnet, wie die Schleifscheibe 11, jedoch um 90° versetzt. Durch eine Drehung der Haltestange 24 um 90° kann damit ein Werkzeugwechsel bei im wesentlichen gleichbleibender Positionierung erfolgen. Das fingerförmige Schleifwerkzeug 21 ist ebenfalls mittels einer Turbine 25 angetrieben, welche gemäss Fig. 7 als Axialturbine ausgestaltet ist. Die oben eintretende Antriebsflüssigkeit, welche durch eine separate Zuleitung (nicht gezeigt) von der Pumpe 2 zugeführt wird, durchströmt schraubenförmige Antriebsschaufeln 26, die koaxial zum Schleifwerkzeug 21 angeordnet sind und tritt unten durch einen Ausgang 27 als Kühlflüssigkeit auf die Bearbeitungsstelle aus. Wahlweise kann mittels eines ausserhalb der Bearbeitungskammer in der Zuleitung vorhandenen 3/2 Wegventils die eine oder die andere Turbine wahlweise betrieben werden.

In Fig. 9 ist vergrössert eine weitere Ausführung des Werkzeugträgers 6 gezeigt, wobei für das fingerförmige Schleifwerkzeug 21 und die Trennscheibe 11 ein gemeinsamer hydrodynamischer Antrieb mittels eines Peltonrads 10 vorgesehen ist, das seitlich an seiner Peripherie ein Tellerrad 30 trägt, welches in ein Ritzel 31 an der Achse des fingerförmigen Schleifwerkzeugs 21 eingreift und dieses treibt. Für den Werkzeugwechsel wird dieser Werkzeugträger 6 um 180° um die Haltestangenachse 24 gedreht. Während die Trennscheibe fest mit dem Peltonrad 10 verbunden ist, kann das fingerförmige Schleifwerkzeug antriebsmässig abgekoppelt werden, indem das Kegelrad 30 zusammen mit der ganzen Antriebseinheit durch äussere Beaufschlagung axial im Werkzeughalter 6 verschiebbar ist.

Zur Erläuterung der gegenseitigen Positionierung von Werkzeugträger 6 und Werkstückhalter bei der Bearbeitung kehren wir zu Fig. 3 zurück. Der Werkstückhalter 5, welcher in dieser Figur ohne den Rohling gezeigt ist, und durch ein flüssigkeitsfestes Lager 28 aus der Bearbeitungskammer 4 hinausgeführt ist, ist einerseits um seine Achse drehwinkelverstellbar und andererseits längs derselben Achse verschiebbar. Beim Bearbeitungsvorgang sind diese beiden Bewegungen überlagert und zwar in einem festen Verhältnis von Vorschublänge und Drehwinkel von ca. 50 µ pro Umdrehung, so dass das Schleifwerkzeug die Formkörperoberfläche längs eines schraubenförmigen Arbeitswegs freilegt und die programmierte Kontur schafft.

Zur Erzeugung dieses Bewegungsablaufs sind zwei Schrittmotoren 51 und 52 vorgesehen, welche unabhängig voneinander angesteuert werden können und auf den Werkstückhalter 5 einwirken. Der eine Schrittmotor 51 treibt über ein Ritzel ein walzenförmiges Stirnrad 54, in welches seinerseits ein auf dem Werkstückhalter 5 drehfest angeordnetes Stirnrad 55 eingreift. Die Betätigung des Schrittmotors 51 hat deshalb eine Drehung des Werkstückhalters 5 um seine Achse zur Folge. Dieser weist an seiner hinteren Seite eine Spindel 56 auf, welche in einer drehbar im Gehäuse gehaltenen Spindelmutter 57 gelagert ist. Die Spindelmutter 57 ist nun über ein Ritzel 58 des zweiten Schrittmotors 52 drehbar, was eine Verschiebung des Werkstückhalters 5 längs seiner Achse bewirkt. Die oben erläuterte Drehung des Werkstückhalters führt wegen der Lagerung in der Spindelmutter 57 ebenfalls zu einer Längsverschiebung. Die Anordnung ist nun so getroffen, dass durch das Taktverhältnis der Schrittmotoren 51, 52 die gewünschte Kombination von Rotation und Vorschub bei der Bearbeitung eingestellt werden kann.

Um die für die Bearbeitung notwendige Ausgangslage für den Werkstückhalter 5 zu gewinnen, ist eine Gabel-Lichtschranke 59 vorgesehen, welche bei zurückgezogenem Werkstückhalter mittels einer Rippe im Stirnrad 55 unterbrochen wird und somit eine exakte Ausgangsposition bestimmt. Von da aus wird die jeweilige Position durch das inkrementale Wegmass der Schrittmotoren 51, 52 bestimmt.

Wenden wir uns nun dem Werkzeugträger 6 zu, der an einer Haltestange 24 aufgehängt ist, welche ebenfalls durch ein flüssigkeitsfestes Lager 61 aus der Bearbeitungskammer 4 austritt. Beim beschriebenen Ausführungsbeispiel sind die mechanischen Stellelemente für den Werkzeugträger und den Werkstückhalter analog ausgestaltet. Die Haltestange 24 ist um ihre Längsachse drehbar und längs dieser Achse verschiebbar, wobei auch hierfür in entsprechender Weise zwei Schrittmotoren 62, 63 vorgesehen sind. Wegen der konstruktiven Analogie zum Werkstückhalter 5 wird auf die vorstehende Beschreibung verwiesen. Beim eigentlichen Bearbeitungsvorgang werden nur translatorische Bewegungen des jeweiligen Werkzeugs gegen die Achse des Werkstückhalters hin und von ihr weg ausgeführt, was durch Betätigung des Schrittmotors 62 bei Stillstand des Schrittmotors 63 geschieht. Mittels des Schrittmotors 63 lässt sich durch Rotation der Werkzeugwechsel vornehmen. Da beide Bearbeitungswerkzeuge exzentrisch zur Werkzeugträgerlängsachse angebracht werden, gestattet eine Drehung um 90° (Fig. 5) bzw. 180° (Fig. 9) vom Einsatz des scheibenförmigen Werkzeugs 11 auf das fingerförmige 21 umzustellen. Ebenso erlaubt die exzentrische Lage, das fingerförmige Werkzeug bezüglich der Werkstückhalterachse auf einer Kreisbahn nach links und rechts zu schwenken, was einem zusätzlichen Freiheitsgrad entspricht. Dank dieser Werkzeugkombination lassen sich nun jegliche in der zahnärztlichen Restauration bekannten Formen – Inlays, Onlays, aber auch Kronen und komplizierte Teile – in einem Arbeitsgang fertigen.

Wegen der Abnutzung der Bearbeitungsflächen der Schleifwerkzeuge muss jeweils vor der Bearbeitung eine Justierung der Arbeitsflächen der Werkzeuge bezüglich der Achse des Werkstückhalters 5 erfolgen, um eine massgerechte Formgebung sicherzustellen. Hierfür wird auf Fig. 7 verwiesen. Darin ist neben den bisher gezeigten Teilen insbesondere eine berührungslose Drehzahlmesseinrichtung gezeigt, die einen an der Turbine 10 angeordneten Permanentmagneten 71 und einen ausserhalb der Bearbeitungskammer angeordneten induktiven Aufnehmer 70 besitzt. Die Frequenzsignale des Aufnehmers gehen durch einen Impulsformer 72 in einen Zähler 73. In einer logischen Einheit 74, welche, wie der Zähler dem genannten Rechner angehört, wird eine Diskrimination auf bestimmte, eingestellte Frequenzwerte, entsprechend der Drehzahl des Werkzeugs, durchgeführt. Unterschreitet die Frequenz einen bestimmten Frequenzwert, so werden Steuersignale für die Auslösung bestimmter Funktionen ausgelöst. Die genannte Justierung erfolgt nun dadurch, dass das Schleifwerkzeug zunächst von oben die bezüglich Radius eng tolerierte Referenzstelle 19 des Rohlings 14 anfährt, welche in dessen Halterung vorgesehen ist. Das Schleifwerkzeug wird damit gebremst auf einen Drehzahlwert, der in der logischen Einheit 74 diskriminiert wird und eine Grobjustierung vorgibt. In einem zweiten Versuch wird danach die Referenzstelle des inzwischen um 90° gedrehten Rohlings bei abgekuppeltem Rotationsantrieb im Leerlauf langsam angefahren und ein höherer Drehzahlwert diskriminiert, der einer relativ kleinen Abbremsung entspricht. Die entsprechende Position des Schrittmotors 62 dient hernach als Ausgangslage für die inkrementale Wegmessung. Nach der Justierung beginnt die schleifende Bearbeitung des Rohlings mittels der Trennscheibe 11 vorzugsweise von seinem freien Ende her auf geschraubten Bahnen entlang der zu schaffenden Kontur.

Eine weitere Anwendung der berührungslosen Frequenzmessung ist die Steuerung der momentanen Abtragsleistung. Obschon das Verhältnis von Vorschublänge und Drehwinkel des Werkstückhalters vorzugsweise fest bleibt, wie vorne dargestellt, können doch deren absolute Werte je nach Bearbeitungstiefe geändert werden. Die Drehzahl des Schleifwerkzeugs kann dabei als Mass für den Arbeitswiderstand genommen werden, der bestimmte Werte nicht überschreiten soll, um eine Beschädigung des Formstücks bzw. des Werkzeuges zu vermeiden. Eine bestimmte Abbremsung löst damit eine Herabsetzung der Schrittzahlen der Schrittmotoren 51, 52 aus und umgekehrt. Dies kann beispielsweise im Sinne einer Zweipunktregelung zwischen zwei fest vorgegebenen Werten erfolgen.

Nach der Bearbeitung wird das Formstück an der geeigneten Stelle vom restlichen Rohling durch die Schleifscheibe abgetrennt und ist zur Verwendung unmittelbar bereit. Die Bearbeitung des Formstücks läuft bei der beschriebenen Vorrichtung in der Zeit von wenigen Minuten ab, so dass der Formteil in Anwesenheit des Patienten und während dem Andauern einer allfälligen Lokalanästhesie geformt und unmittelbar darauf eingesetzt werden kann.

Der kurzfristige Unterhalt der Vorrichtung für eine folgende Bearbeitung besteht lediglich im Auswechseln von mit abrasivem Material angereicherten Wassers im Behälter 3 sowie im Einsetzen eines neuen Rohlings in den Werkstückhalter 5.

Das Bearbeitungsverfahren läuft also gemäss der vorstehenden Beschreibung in höchstens vier Phasen bei ein und derselben Aufspannung des Rohlings ab. In einer ersten Phase wird der Rohling 14 in den Werkstückhalter 5 eingesetzt und die Vorrichtung justiert sich in der beschriebenen Weise durch das Anfahren einer Referenzstelle am Rohling. In einer zweiten Phase wird hernach der Zahnrestaurationskörper aus dem Rohling mittels der Trennscheibe 11 vollständig herausgearbeitet bis auf allfällige, konkave Bereiche, wobei eine schmale Brücke zum Werkstückhalter 5 stehen bleibt. Falls nötig, erfolgt nun automatisch ein Werkzeugwechsel auf das fingerförmige Abtragswerkzeug 21, um die konkaven Stellen herauszuarbeiten. In einer letzten Phase erfolgt die Abtrennung des nun fertig bearbeiteten Zahnrestaurationskörpers mittels der Trennscheibe, der hernach zum sofortigen Einbau und Verfügung steht.

## Patentansprüche

1. Verfahren für die verwendungsfertige, formgestaltende Herstellung individuell passender Zahnrestaurationskörper, wie Füllungen, Kronen, Brücken oder Teile derselben, aus einem konfektionierten Rohling aus zahnrestaurativem Material, wobei der Rohling in einem Werkstückhalter befestigt und damit um eine Raumachse drehbar ist und wobei ein Werkzeugträger mit rotierendem Werkzeug vorgesehen ist, dessen Rotationsachse im wesentlichen parallel zur genannten Raumachse verläuft und dessen relative Lage quer zu dieser Raumchase veränderbar ist, dadurch gekennzeichnet, dass als rotierendes Werkzeug ein Trennscheibenblatt verwendet wird, mittels welchem der Zahnrestaurationskörper in einer einzigen Aufspannung aus dem Rohling entlang einem im wesentlichen schraubenlinienförmigen Abtragsweg in Richtung der genannten Raumachse vollständig herausgearbeitet wird, wobei der Abstand von Trennscheibenblatt zu Raumachse und die jeweilige Drehwinkellage des Werkstückhalters in gegenseitiger Abhängigkeit entsprechend der herzustellenden Kontur gesteuert werden.

2. Verfahren nach Anspruch 1, dadurch gekennzeichnet, dass die Raumchase, um welche der Rohling bei der Herausarbeitung als Werkstück gedreht wird, im wesentlichen der mesiodistalen Verlaufsachse des zu restaurierenden Zahns entspricht.

3. Verfahren nach einem der vorangehenden Ansprüche, dadurch gekennzeichnet, dass auf dem im wesentlichen schraubenlinienförmigen Abtragsweg das Verhältnis von Drehwinkel des Rohlings und Vorschub konstant ist.

4. Verfahren nach einem der vorangehenden Ansprüche, dadurch gekennzeichnet, dass die relative Vorschubgeschwindigkeit zwischen dem Rohling und dem Trennscheibenblatt in Abhängigkeit von der gemessenen Drehzahl des Trennscheibenblatts so gesteuert wird, dass der Arbeitswiderstand des Abtragswerkzeugs einen bestimmten Werk nicht überschreitet.

5. Vorrichtung zur verwendungsfertigen, formgebenden Ausarbeitung eines individuell passenden Zahnrestaurationskörpers aus einem Rohling aus zahnrestaurativem Material nach dem Verfahren von Anspruch 1, mit einem drehbar angeordneten Werkstückhalter für den Rohling und einem Werkzeugträger für ein rotierendes Trennscheibenblatt, dessen Rotationsachse im wesentlichen parallel zur Drehachse des Werkstückhalters verläuft und dessen relative Lage quer zu dieser Raumachse veränderbar ist, dadurch gekennzeichnet, dass die Vorrichtung eine Einrichtung zur optischen Erfassung von räumlichen Oberflächenformen mittels Bildauswertung und einen Rechner zur Errechnung und Speicherung eines Konstruktionsplanes für einen, den Formteil bildenden, an die Oberflächenformen angepassten, Zahnrestaurationskörper aufweist, die in einem gemeinsamen Gehäuse (1) angeordnet sind, in das ferner eine Bearbeitungskammer (4) integriert ist, in welche der Werkzeugträger (6) und der Werkstückhalter (5) hineinragen und die gegen das restliche Gehäuse flüssigkeitsdicht abgeschlossen sowie von aussen zugänglich ist, wobei der Werkstückhalter mittels vom Rechner gesteuerten Stellmotoren gedreht und längs der Drehachse verschoben und wobei der Werkzeughalter mittels eines vom Rechner gesteuerten Stellmotors in seinem Abstand von der Drehachse einstellbar ist.

6. Vorrichtung nach Anspruch 5, dadurch gekennzeichnet, dass der Werkstückhalter (5) an einer drehbaren und verschiebbaren Gewindespindel (56) angeordnet ist, die in einer drehbaren, axial feststehenden Spindelmutter (57) gelagert ist, wobei zur Verstellung des Werkstückhalters zwei Stellmotoren (51, 52) vorgesehen sind, von denen der eine die Drehlage der Spindelmutter, der andere die Drehlage der Spindel bestimmt.

7. Vorrichtung nach einem der vorangehenden Ansprüche 5 und 6, dadurch gekennzeichnet, dass ein zweites rotierend antreibbares Abtragswerkzeug (21) am Werkzeugträger angeordnet ist, das fingerförmig ausgebildet ist und dass die zwei Abtragswerkzeuge wahlweise einsetzbar sind.

8. Vorrichtung nach einem der vorangehenden Ansprüche 5 bis 7, dadurch gekennzeichnet, dass der Werkzeugträger (6) mittels einem weiteren Stellmotor um seine Zustellachse drehbar ist, wobei diese Drehung einerseits zum Wechsel zwischen den genannten Abtragswerkzeugen und andererseits als zusätzlicher Freiheitsgrad beim Bearbeitungsvorgang einsetzbar ist.

9. Vorrichtung nach einem der vorangehenden Ansprüche 5 bis 8, dadurch gekennzeichnet, dass das Trennscheibenblatt (11) und gegebenenfalls das fingerförmige Abtragswerkzeug (21) einen hydrodynamischen Rotationsantrieb (10; 25) aufweist, wobei eine Turbine am Werkzeugträger (6) angeordnet und von einer vom Werkzeugträger entfernten Druckquelle (2) für die Antriebsflüssigkeit gespeist ist.

10. Vorrichtung nach einem der vorangehenden Ansprüche 5 bis 9, dadurch gekennzeichnet, dass eine mit dem Rechner verbundene Drehzahlmesseinrichtung (70–73) zur Bestimmung der Umdrehungszahl des Trennscheibenblatts vorgesehen ist, wobei die Drehzahlmesseinrichtung (70–73) vom Werkzeugträger (6) entfernt angeordnet ist und die Drehzahlmessung berührungsfrei erfolgt.

11. Vorrichtung nach Anspruch 10, dadurch gekennzeichnet, dass die Drehzahlmesseinrichtung (70–73) Teil eines Regelkreises zur Einstellung der jeweiligen relativen Vorschubgeschwindigkeit zwischen dem Rohling und dem Abtragswerkzeug bei der Bearbeitung ist und über den Regelkreis (74) mit entsprechenden Stellmotoren (62; 51, 52) verbunden ist, derart dass der Arbeitswiderstand des Abtragswerkzeugs einen bestimmten Wert nicht überschreitet.

12. Vorrichtung nach Anspruch 11, dadurch gekennzeichnet, dass der Rechner eine Diskriminatorstufe aufweist, die auf mindestens einen eingestellten Drehzahlwert anspricht und die mit der Drehzahlmesseinrichtung verbunden ist, womit zur Lagejustierung des Werkzeugträgers (6) beim Ansprechen der Diskriminatorstufe jeweils dessen Lage beim Kontakt des Schleifwerkzeugs mit einer Referenzstelle (19) des im Werkstückhalter eingesetzten Rohlings (14) feststellbar ist, um damit Variationen des Werkzeugdurchmessers auszugleichen.

## Revendications

1. Procédé de fabrication avec mise en forme et dans un état prêt à l'emploi, de corps restauratifs de dents, pouvant être adaptés individuellement, tels que garnitures, couronnes, bridges ou parties de ces corps, à partir d'une ébauche confectionnée en une matière propre à la restauration des dents, dans lequel l'ébauche est fixée dans porte-pièce à travailler et ainsi peut tourner autour d'un axe dans l'espace, et dans lequel est prévu porte-outil muni d'un outil tournant dont l'axe de rotation s'étend en principe parallèlement à l'axe dans l'espace précité, et dont la position relative peut être modifiée transversalement à cet axe dans l'espace, caractérisé en ce que l'on emploie comme outil tournant une meule de tronçonnement en forme de feuille mince au moyen de laquelle le corps de matière propre à la restauration des dents est complètement travaillé, dans un encastrement unique, le long d'un trajet de dégagement de matière en principe hélicoïdal dans la direction dudit axe dans l'espace, la distance de la meule de tronçonnement en forme de feuille mince à l'axe dans l'espace, et la position angulaire de rotation du porte-pièce à travailler sont commandées chaque fois en dépendance mutuelle, de façon correspondant au contour à fabriquer.

2. Procédé suivant la revendication 1, caractérisé en ce que l'axe dans l'espace, autour duquel on fait tourner l'ébauche comme pièce à travailler, lors de son traitement, correspond en principe à l'axe d'étendue mésio-distal de la dent à restaurer.

3. Procédé suivant l'une des revendications précédentes, caractérisé en ce que, sur le trajet de dégagement de matière de forme en principe hélicoïdale, le rapport entre l'angle de rotation de l'ébauche et l'avance est constant.

4. Procédé suivant l'une des revendications précédentes, caractérisé en ce que la vitesse d'avancement relatif entre l'ébauche et la meule de tronçonnement en forme de feuille mince est commandée en dépendance du nombre de tours mesuré de la meule de tronçonnement en forme de feuille mince, de façon telle que la résistance au travail de l'outil de dégagement de matière ne dépasse pas une valeur déterminée.

5. Dispositif pour la mise en forme et dans l'état prêt à l'emploi d'un corps restauratif de dents, pouvant être adapté individuellement, à partir d'une ébauche de matière propre à la restauration des dents suivant le procédé de la revendication 1, avec un porte-pièce à travailler pour l'ébauche, disposé pour pouvoir tourner, et avec un porte-outil pour une meule de tronçonnement en forme de feuille mince tournante, dont l'axe de rotation s'étend en principe parallèlement à l'axe de rotation du porte-pièce à travailler et dont la position relative peut être modifiée transversalement à cet axe dans l'espace, caractérisé en ce que le dispositif présente une installation pour le captage optique de formes de surfaces dans l'espace à l'aide d'un dispositif d'exploitation d'image, et un calculateur pour le calcul de la mise en mémoire d'un plan de construction pour un corps restauratif de dents, constituant la partie en forme, adapté aux formes dans l'espace, ces moyens étant disposés dans un boîtier (1) commun auquel est encore intégrée une chambre de traitement (4) dans laquelle pénètrent le porte-outil (6) et le porte-pièce à travailler (5) et qui est fermée pour être étanche aux liquides, par rapport au reste du boîtier, et qui est accessible de l'extérieur, le porte-pièce à travailler étant amené à tourner et à se déplacer le long de l'axe de rotation au moyen de servomoteurs commandés par le calculateur, et où le porte-outil est réglable en distance à l'axe de rotation par un servomoteur commandé par le calculateur.

6. Dispositif suivant la revendication 5, caractérisé en ce que le porte-outil (5) est monté sur une broche filetée (56) capable de tourner et de se déplacer en translation, et qui est montée dans un écrou pour broche (57) capable de tourner et immobile axialement, deux servomoteurs (51, 52) étant prévus pour le déplacement du porte-outil, l'un de ces moteurs déterminant la position en rotation de l'écrou pour broche, l'autre la position en rotation de la broche.

7. Dispositif suivant l'une des revendications précédentes 5 et 6, caractérisé en ce qu'un deuxième outil de dégagement de matière (21) tournant et susceptible d'être entraîné est disposé sur le porte-outil, ce deuxième outil étant réalisé en forme de doigt, et en ce que les deux outils de dégagement de matière peuvent être employés au choix.

8. Dispositif suivant l'une quelconque des revendications 5 à 7, caractérisé en ce que le porte-outil (6) peut tourner autour de son axe de position sous l'action d'un autre servomoteur, cette rotation étant utilisable d'une part pour le changement de l'un à l'autre des outils de dégagement de matière précités et d'autre part, comme offrant un degré de liberté supplémentaire dans le processus de traitement.

9. Dispositif suivant l'une des revendications 5 à 8, caractérisé en ce que la meule de tronçonnement en forme de feuille (11) et éventuellement l'outil de dégagement de matière (21) en forme de doigt présentent un dispositif d'entraînement en rotation hydrodynamique (10; 25), une turbine étant disposée sur le porte-outil (6) et étant alimentée par une source de pression (2) pour le liquide d'entraînement, éloignée du porte-outil.

10. Dispositif suivant l'une des revendications précédentes 5 à 9, caractérisé en ce qu'est prévu un dispositif de mesure du nombre de tours (70–73) relié au calculateur, pour la détermination du nombre de tours de la meule de tronçonnement en forme de feuille (11), le dispositif de mesure du nombre de tours (70–73) étant disposé à distance du porte-outil (6) et la mesure du nombre de tours s'effectuant sans contact.

11. Dispositif suivant la revendication 10, caractérisé en ce que le dispositif (70–73) de mesure du nombre de tours fait partie d'un cercle de réglage pour régler la vitesse relative d'avancement, chaque fois, entre l'ébauche et l'outil de dégagement de matière, lors du traitement, et est relié par le cercle de réglage (74) à des servomoteurs correspondants (62; 51, 52) de telle sorte que la résistance au travail de l'outil de dégagement de matière ne dépasse pas une valeur déterminée.

12. Dispositif suivant la revendication 11, caractérisé en ce que le calculateur comporte un étage discriminateur qui répond à au moins une valeur fixée du nombre de tours et qui est relié au dispositif de mesure du nombre de tours, en sorte que, pour l'ajustement en position du porte-outil (6) lors de la réponse de l'étage discriminateur, sa position puisse être fixée chaque fois lors du contact de l'outil de meulage avec un point de référence (19) de l'ébauche (14) montée dans le porte-pièce à travailler, pour ainsi compenser des variations du diamètre de l'outil.

**Claims**

1. Process for the ready-for-use shaping of individually fitting tooth restoring bodies, such as fillings, crowns, bridges or parts thereof, from a made-up blank of tooth-restoring material, the blank being secured in a workpiece holder and hence being rotatable about a space axis and a tool carrier having a rotating tool being provided, the axis of rotation of which runs essentially parallel to the said space axis and the relative position of which transversely to this space axis can be altered, characterized in that a cutting-off wheel disc is used as rotating tool, and by means of this the tooth restoring body can be formed completely in a single setting-up fr the blank along an essentially helical material removal path in the direction of the said space axis, the distance of the cutting-off wheel disc from the space axis and the respective angular position of rotation of the workpiece holder being controlled in mutual dependence according to the contour to be produced.

2. Method according to Claim 1, characterized in that the space axis about which the blank is turned as a workpiece during formation corresponds essentially to the mesio-distal axis of extension of the tooth to be restored.

3. Method according to one of the preceding claims, characterized in that the relationship between the angle of rotation of the blank and the feed is constant along the essentially helical material removal path.

4. Method according to one of the preceding claims, characterized in that the relative feed rate between the blank and the cutting-off wheel disc is controlled as a function of the measured speed of the cutting-off wheel disc in such a way that the dynamic resistance of the material removal tool does not exceed a certain value.

5. Apparatus for the ready-for-use shaping of an individually fitting tooth restoring body from a blank of tooth-restoring material in accordance with the method of Claim 1, having a rotatably arranged workpiece holder for the blank and a tool carrier for a rotating cutting-off wheel disc, the axis of rotation of which extends essentially parallel to the axis of ro tation of the work-piece carrier and the relative position of which can be altered transversely to this space axis, characterized in that the apparatus has a device for the optical detection of three-dimensional surface shapes by means of image evaluation, and a computer for calculating and storing a structural plan for a tooth restoring body forming the shaped part and matched to the surface shapes, which device and computer are arranged in a common housing (1) in which, in addition, a machining chamber (4) is integrated into which the tool carrier (6) and the workpiece holder (5) protrude and which is sealed in fluid-tight manner from the remainder of the housing and is accessible from outside, the workpiece holder being rotated by means of servomotors controlled by the computer and displaced along the axis of rotation, and the distance of the tool carrier from the axis of rotation being adjustable by means of a servomotor controlled by the computer.

6. Apparatus according to Claim 5, characterized in that the workpiece holder (5) is arranged on a rotatable and displaceable threaded spindle (56) which is mounted in a rotatable, axially fixed spindle nut (57), two servomotors (51, 52), of which one determines the rotational position of the spindle nut and the other determines the rotational position of the spindle, being provided for the adjustment of the workpiece carrier.

7. Apparatus according to either of preceding Claims 5 and 6, characterized in that a second material removal tool (21) which can be driven in rotation is arranged on the tool carrier, said material removal tool being of finger-shaped design, and in that the two material removal tools can be used alternatively.

8. Apparatus according to one of preceding Claims 5 to 7, characterized in that the tool carrier (6) can be rotated about its infeed axis by means of a further servomotor, it being possible to use this rotation, on the one hand, for the changeover between the said material removal tools and, on the other hand, as an additional degree of freedom during the machining procedure.

9. Apparatus according to one of preceding Claims 5 to 8, characterized in that the cutting-off wheel disc (11) and, where appropriate, the finger-shaped material removal tool (21) has a hydrodynamic rotary drive (10; 25), a turbine being arranged on the tool carrier (6) and being fed by a pressure source (2), at a distance from the tool carrier, for the driving fluid.

10. Apparatus according to one of preceding Claims 5 to 9, characterized in that a speed measuring device (70–73) connected to the computer is provided for determining the number of revolutions of the cutting-off wheel disc, the speed measuring device (70–73) being arranged at a distance from the tool carrier (6) and the speed being measured in contactless fashion.

11. Apparatus according to Claim 10, characterized in that the speed measuring device (70–73) is part of a control loop for adjusting the respective relative feed rate between the blank and the material removal tool during machining and is connected via the control loop (74) to corresponding servomotors (62; 51, 52), in such a way that the dynamic resistance of the material removal tool does not exceed a certain value.

12. Apparatus according to Claim 11, characterized in that the computer has a discriminator stage which responds to at least one adjusted speed value and is connected to the speed measuring device, by means of which, for adjusting the position of the tool carrier (6) when the discriminator stage responds, the position of the tool carrier can be ascertained in each case on contact of the grinding tool with a reference location (19) of the blank (14) inserted in the workpiece holder, in order thereby to compensate variations of the tool diameter.

_Fig. 2_

_Fig. 1_

2|4

_Fig.3_

_Fig.4_

_Fig.5_

a.

10

b.

_Fig.6_

25

26

27    21

_Fig.7_

74

73

72

70

71

10

4

6

14

13

11

8

5

2

3

62    51,52

_Fig.8_

4|4

8

24

6

31

21

30

10

32

11

_Fig. 9_